# EUROPEAN PATENT APPLICATION

(11) **EP 3 471 032 A1**
(43) Date of publication of application: **17.04.2019**
(21) Application number: 18199798.2
(22) Date of filing: 11.10.2018
(51) Int. Cl.: G06Q 10/06

(54) **SYSTEMS AND METHODS FOR EVALUATING PERSONNEL FOR TASK ASSIGNMENT**

(30) Priority: 13.10.2017 US 201715783383
(71) Applicant: Vocollect, Inc., Pittsburgh, PA 15235 (US)
(72) Inventor: NICHOLS, Matthew Aaron, Morris Plains, NJ New Jersey 07950 (US)
(74) Representative: Houghton, Mark Phillip

(57) **Abstract**

The present disclosure is directed to systems and methods for evaluating workers for executing various types of tasks. As can be appreciated, a worker who is best suited for carrying out a first task requiring a first set of skills may not necessarily be the most suitable for carrying out a second task that requires a different set of skills. Accordingly, a number of workers are evaluated when performing various tasks and the results of the performance evaluations are stored in a database in the form of performance metrics. The performance metrics of each worker and the associated task performed by the worker are linked to each other by using a machine-readable code. The machine-readable code, which can be a stock keeping unit (SKU) code, is used to search the database for retrieving and evaluating the various performance metrics and identifying one or more workers for executing an upcoming task.

## Description

### FIELD OF THE INVENTION

The present invention generally relates to task assignment procedures and more particularly relates to systems and methods for evaluating personnel for task assignments.

### BACKGROUND

Goods handling facilities such as product distribution centers, often try to improve efficiency in various aspects of their operations. However, some of these efforts may prove counterproductive if carried out without proper foresight or planning. For example, it may appear intuitive to use a worker who performs his/her tasks very quickly without wasting time chatting with his/her customers. Such an approach may provide an improvement in terms of time. However, the improved efficiency in terms of time may come at the expense of reduced customer satisfaction. On the other hand, using another worker who generates high customer satisfaction as a result of chatting with his/her customers may prove inefficient in terms of an amount of time taken to complete a set of tasks. Thus, identifying the right kind of worker for the right kind of task can prove quite challenging and can lead to poor results if done improperly or inadequately.

### SUMMARY

In an exemplary embodiment in accordance with the disclosure, a method includes evaluating a first worker executing a first task; creating a first performance metric of the first worker for the first task based on the evaluation; utilizing a task assignment system to assign a code to the first task; storing the first performance metric of the first worker in a database of the task assignment system; configuring the database to link the code to the first performance metric of the first worker; and executing a task assignment procedure comprising utilizing the code to search the database and access the first performance metric of the first worker.

In another exemplary embodiment in accordance with the disclosure, a method includes assigning a machine-readable code to a first task; evaluating a first worker executing the first task; creating a first performance metric of the first worker for the first task based on the evaluation; storing the first performance metric of the first worker in a database; configuring the database to associate the machine-readable code with the first performance metric of the first worker; evaluating a second worker executing the first task; creating a second performance metric of the second worker for the first task based on the evaluation; storing the second performance metric of the second worker in the database; configuring the database to associate the machine-readable code with the second performance metric of the second worker; and executing a task assignment procedure. The task assignment procedure comprises utilizing the machine-readable code to search the database and access the first performance metric of the first worker and the second performance metric of the second worker; and utilizing the first performance metric and the second performance metric to evaluate at least one of the first worker or the second worker for executing a second task.

In yet another exemplary embodiment in accordance with the disclosure, a non-transitory computer-readable storage medium contains instructions executable by a processor for performing operations such as receiving at least a first machine-readable code, the first machine-readable code at least indicative of a characteristic of a first object or a characteristic of a first task; utilizing the first machine-readable code to search a database, the database comprising a name of a first worker, a name of a second worker, one or more performance metrics of the first worker, and one or more performance metrics of the second worker; comparing the one or more performance metrics of the first worker to the one or more performance metrics of the second worker; and offering a search result that recommends utilizing one of the first worker or the second worker for at least one of handling the first object or executing the first task.

The foregoing illustrative summary, as well as other exemplary objectives and/or advantages described in this disclosure, and the manner in which the same are accomplished, are further explained within the following detailed description and its accompanying drawings.

### BRIEF DESCRIPTION OF THE DRAWINGS

FIG. 1 schematically depicts two workers when executing a task involving handling of a heavy object.
FIG. 2 schematically depicts the two workers shown in FIG. 1 when executing a task involving handling of a delicate object.
FIG. 3 schematically depicts an exemplary computing system that can be used to implement a task assignment system in accordance with an exemplary embodiment of the disclosure.
FIG. 4 shows a first exemplary database that can be used to execute a task assignment procedure in accordance with the disclosure.
FIG. 5 shows a second exemplary database that can be used to execute a task assignment procedure in accordance with the disclosure.
FIG. 6 shows a third exemplary database that can be used to execute a task assignment procedure in accordance with the disclosure.

### DETAILED DESCRIPTION

Throughout this description, embodiments and variations are described for the purpose of illustrating uses and implementations of inventive concepts. The illustrative description should be understood as presenting examples of inventive concepts, rather than as limiting the scope of the concepts as disclosed herein. Towards this end, certain words and terms are used herein solely for convenience and such words and terms should be broadly understood as encompassing various objects and actions that are generally understood in various forms and equivalencies by persons of ordinary skill in the art. For example, the word "worker" as used herein generally represents a human entity carrying out a task. The word "task" as used herein can be one of a wide variety of tasks and is not limited to any one specific work environment. Furthermore, the word "example" as used herein is intended to be non-exclusionary and non-limiting in nature. More particularly, the word "exemplary" as used herein indicates one among several examples and it should be understood that no special emphasis, exclusivity, or preference, is associated or implied by the use of this word.

The present disclosure is generally directed to systems and methods for evaluating personnel for executing various types of tasks. For example, a first task may entail transporting a heavy object from one location to another, a second task may entail transporting a fragile object from one location to another, a third task may entail completing the task within a short period of time, a fourth task may entail diligence and patience for completing the task, and a fifth task may entail using creativity for completing the task. A worker who may be most suitable for carrying out a first task among these various tasks may not necessarily be the most suitable for carrying out a second task that requires a different set of skills. Thus, in accordance with the various exemplary embodiments described herein, various workers are evaluated when carrying out various tasks and the results of these evaluations are stored in a database. A search for one or more candidates for executing an upcoming task can be carried out by searching the database using machine-readable codes that are assigned to the various tasks and the various evaluations in accordance with the disclosure. These aspects will be described below in further detail.

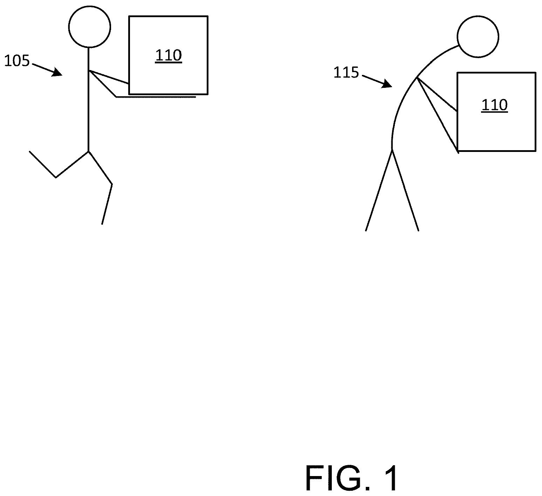

FIG. 1 schematically depicts two workers executing a task that involves handling of a heavy object **110.** Worker **105** is physically strong and is capable of transporting the heavy object **110** quickly and easily from a first location to a second location. On the other hand, worker **115** is physically weaker than worker **105** and has to expend a greater amount of effort and takes longer to transport the heavy object **110** from the first location to the second location. If time and effort were the only criteria for comparing worker **105** against worker **115,** it is obvious that worker **105** is more suitable than worker **115** for the task of transporting the heavy object **110** from the first location to the second location. However, the suitability of worker **105** for executing the task of transporting the heavy object **110** from the first location to the second location does not necessarily mean that worker **105** would be automatically better than worker **115** for executing a different task having different criteria.

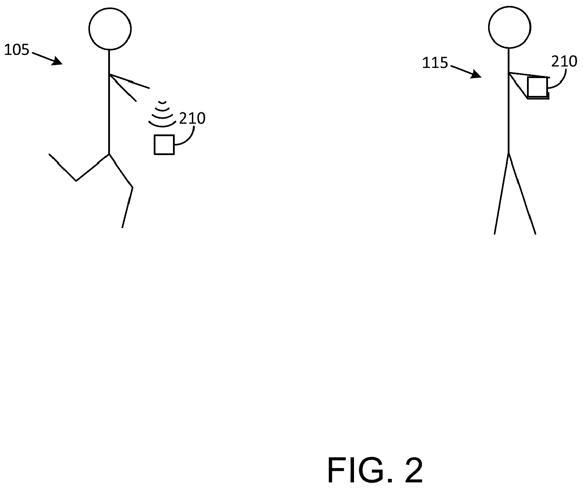

More particularly, FIG. 2 shows worker **105** and worker **115** when transporting a delicate object **210** from the first location to the second location. Playing to his strength, worker **105** attempts to transport the delicate object **210** quickly from the first location to the second location. In doing so, the worker **105** drops the delicate object **210** and causes damage to the object **210.** On the other hand, worker **115** carefully and safely transports the delicate object **210** from the first location to the second location even though the worker **115** takes somewhat longer than the worker **105** in executing this task.

It can be appreciated in view of the two exemplary scenarios depicted in FIGs 1 and 2, that the worker **105** is better suited for tasks requiring lifting of heavy objects and rapid transportation, whereas the worker **115** is better suited for tasks requiring handling of delicate objects.

By extension of the examples provided above, it can be appreciated that each worker of a workforce can have certain skills and capabilities that have to be identified and utilized based on the nature of individual tasks to be performed by the various workers of the workforce. Identifying the skills and capabilities of various workers can become cumbersome and unreliable if carried out, for example, by an individual supervisor in a company. The supervisor has to rely on his/her memory to recollect performance metrics of individual workers when trying to evaluate the workers for executing a new task at a later date. This approach can prove unreliable and inefficient.

Furthermore, the worker performance metrics identified by the individual supervisor can be lost if the supervisor decides to leave the company without entering and storing the worker performance metrics in a computer system of the company prior to leaving the company. The person replacing the supervisor is therefore compelled to carry out a fresh set of observations and evaluations even when one or more of upcoming tasks is exactly the same, or similar to, various tasks that have already been performed by the workers.

However, storing worker performance metrics in a computer system can prove ineffective for use when needed by the replacement supervisor for example, particularly if the amount of information to be stored is large and the information is not properly configured for carrying out searches. For example, poorly stored worker performance metrics may make it difficult or impossible for a new supervisor to identify the strengths and weaknesses of individual workers, particularly when the workers have performed a wide variety of tasks, each task requiring a different set of skills.

Thus, some exemplary systems and methods for storing and retrieving worker performance metrics when evaluating workers for task assignment are described herein in accordance with the disclosure. More particularly, disclosed herein is a data storage and retrieval system that uses machine-readable codes to link worker performance metrics to various task-related parameters. The machine-readable codes not only facilitate easy retrieval of stored worker performance metrics, but also facilitate other activities and functionalities associated with machine-readable codes (such as identifying and/or tracking products). A few examples of machine-readable codes that can be used in accordance with the disclosure include a stock keeping unit (SKU) code and various types of barcodes. As is known, barcodes have evolved over time from one-dimensional (ID) linear barcodes to other types of barcodes (such as a QR code, which is one example of a two-dimensional (2D) matrix barcode).

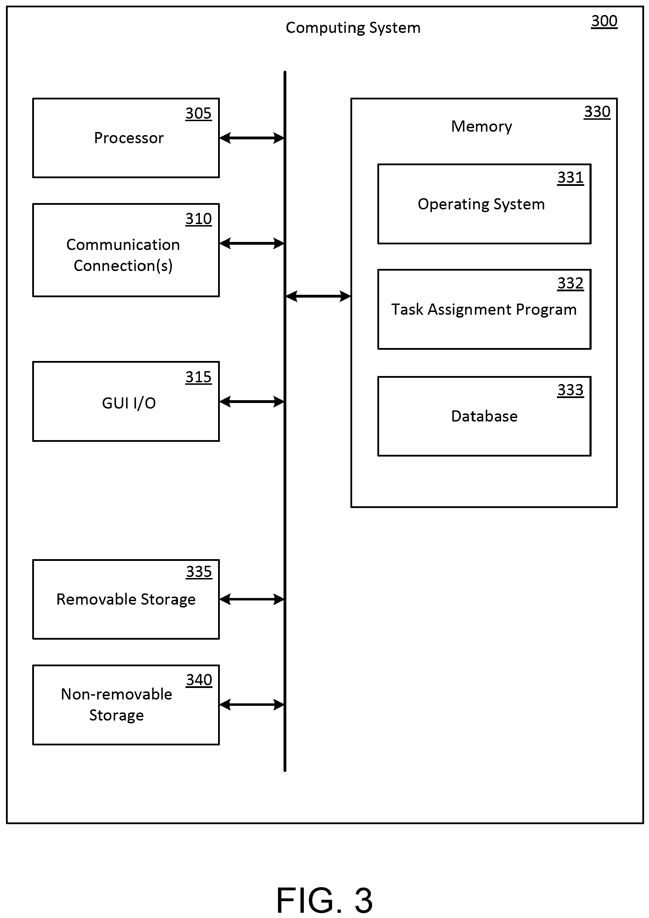

FIG. 3 schematically depicts an exemplary computing system 300 that can be used to implement a task assignment system in accordance with an exemplary embodiment of the disclosure. The computing system **300** can include one or more processors, such as the processor **305** that is configured to communicatively cooperate with a memory **330.** The processor **305** can be implemented and operated using appropriate hardware, software, firmware, or combinations thereof. Software or firmware implementations can include computer-executable or machine-executable instructions written in any suitable programming language to perform the various functions described in this disclosure.

The memory **330** can be used to store program instructions that are loadable and executable by the processor **305** as well as to store data generated during the execution of these programs. Depending on the configuration and type of the computing system **300,** the memory **330** can be volatile (such as random access memory (RAM)) and/or non-volatile (such as read-only memory (ROM), flash memory, etc.). In some embodiments, the memory devices can also include additional removable storage **335** and/or non-removable storage **340** including, but not limited to, magnetic storage, optical disks, and/or tape storage. The disk drives and their associated computer-readable media can provide non-volatile storage of computer-readable instructions, data structures, program modules, and other data. In some implementations, the memory **330** can include multiple types of memory, such as static random access memory (SRAM), dynamic random access memory (DRAM), or ROM.

The memory **330,** the removable storage, and the non-removable storage are all examples of non-transient computer-readable storage media. Such non-transient computer-readable storage media can be implemented in a wide variety of ways that are directed at storage of items such as computer-readable instructions, data structures, and/or program modules. Additional types of non-transient computer storage media that can be present include, but are not limited to, programmable random access memory (PRAM), SRAM, DRAM, ROM, electrically erasable programmable read-only memory (EEPROM), compact disc read-only memory (CD-ROM), digital versatile discs (DVD) or other optical storage, magnetic cassettes, magnetic tapes, magnetic disk storage or other magnetic storage devices, or any other medium which can be used to store the desired information and which can be accessed by the processor **305.** Combinations of any of the above should also be included within the scope of non-transient computer-readable storage media.

Turning to the contents of the memory **330,** the memory **330** can include, but is not limited to, an operating system (OS) **331** and one or more application programs or services for implementing the features and aspects disclosed herein. Such application programs or services can include a task assignment program **332,** and a database **333.** The task assignment program **332** can be used to execute some or all of the functions disclosed herein with respect to the task assignment system. The database **333** can be used to store worker performance metrics as well as other data such as machine-readable codes that are linked to various elements of the worker performance metrics.

The computing system **300** can also include elements such as communications connections **310** and a graphical user interface (GUI) input/output **315.** The communications connections **310** can be used to communicatively couple the computing system **300** to other components, such as another computing system. The GUI input/output **315** can be used to execute some or all of the functions disclosed herein with respect to the task assignment system.

In one exemplary implementation, the computing system **300** is configured as a server computer. A client computer (not shown) can be communicatively coupled to the server computer by utilizing the communications connection **310.** In this configuration, the client computer can initiate and transmit a request to the server computer. The server computer executes a task assignment procedure by accessing the database **333** and/or a database located in the client computer for obtaining worker performance metrics. Interactive communication can take place between the server computer and the client computer during execution of the task assignment procedure and information pertaining to the task assignment procedure can be transmitted by the server computer to the client computer during execution of the procedure and/or upon completion of the procedure.

In another exemplary implementation, the computing system **300** is configured as a client computer. A server computer (not shown) can be communicatively coupled to the client computer by utilizing the communications connection **310.** In this configuration, the server computer can initiate and transmit a request to the client computer. The client computer can execute a task assignment procedure by accessing the database **333** and/or a database located in the server computer for obtaining worker performance metrics. Interactive communication can take place between the client computer and the server computer during execution of the task assignment procedure and information pertaining to the task assignment procedure can be transmitted by the client computer to the server computer during execution of the procedure and/or upon completion of the procedure.

In another exemplary implementation, the computing system **300** is configured to utilize cloud storage in addition to, or in lieu of, using local storage such as the database **333,** removable storage **335,** and non-removable storage **340.** Accordingly, the computing system **300** utilizes the communications connection **310** to communicate with a network such as the Internet and execute a task assignment procedure in accordance with the disclosure. The cloud storage can be used for storing data that is not only relevant to workers in a particular work facility at a particular location but can include workers from various facilities at various other locations. Consequently, the computing system **300** can be used to execute task assignment procedures for evaluating workers on a world-wide basis and assign specific workers to execute specific tasks at various locations of a multinational corporation, for example.

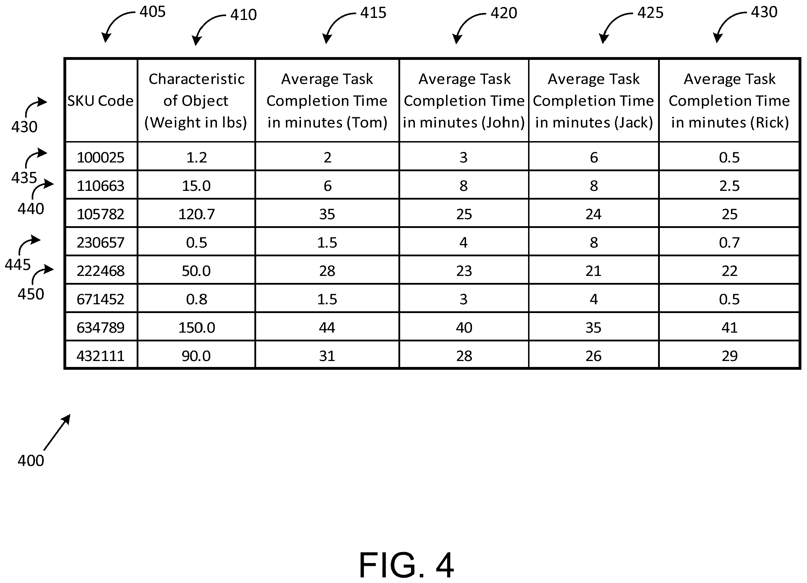

FIG. 4 shows a first exemplary database **400** that can be used to execute a task assignment procedure in accordance with the disclosure. The first exemplary database **400** includes a header row **430** and several other rows below the header row **430.** A first column **405** of the first exemplary database **400** contains various exemplary machine-readable codes (SKU codes in this example). The SKU codes can be assigned by various entities, such as a supervisor of a work facility or an administrator associated with the work facility. The assignment involves using a task assignment system (such as the computing system **300** described above) to assign a unique SKU code to each task. Thus, an exemplary SKU code 100025 shown in the first row **435** of the first exemplary database **400** is assigned to a first task, the exemplary SKU code 110663 shown in the second row **440** of the first exemplary database **400** is assigned to a second task, and so on.

The first exemplary database **400** includes a second column **410** that contains information pertaining to a characteristic of an object that is handled by a worker assigned to a task. In this example, the characteristic is a weight of an object in pounds. Column **410** shows a data entry in the first row **435** which indicates that the weight of a first object handled by a worker assigned to the first task is 1.2 pounds, a data entry in the second row **440** which indicates that the weight of a second object handled by the worker when assigned to the second task is 15.0 pounds, and so on.

The various objects listed in the second column **410** are linked to the corresponding SKU codes listed in the first column **405** in accordance with the disclosure. In one exemplary implementation, the task assignment system automatically links each individual object to a corresponding SKU code. Thus, the object weighing 15 pounds is automatically linked to the SKU code 110663 and so on. In another exemplary implementation, a human entity (such as an administrator) uses the task assignment system to link each individual object to a corresponding SKU code.

After the linking is carried out, any of the SKU codes of the first exemplary database **400** can be used to conduct a search for information pertaining to the characteristic of an object associated with a specific task. Consequently, using a SKU code 222468 (fifth row **450**) as a search term for conducting an exemplary search of the first exemplary database **400** provides a search result that the object associated with the fifth task weighs 50.0 pounds.

The first exemplary database **400** includes a third column **415** that contains performance metrics pertaining to a first worker, Tom, who has executed each of the tasks represented by the SKU codes shown in the first column **405.** In this example, the performance metric pertains to an amount of time taken by Tom to complete each task. Tom has executed the first task (involving the handling of an object weighing 1.2 pounds) in 2 minutes, the second task (involving the handling of an object weighing 15.0 pounds) in 6 minutes, and so on. The third column **415** can be populated with Tom's performance metrics obtained by evaluating Tom when executing each of the various tasks. The evaluation can be carried out for example, by a supervisor of a work facility in which Tom is employed. For doing so, the supervisor uses the task assignment system (such as the computing system **300** described above) to link each of Tom's performance metrics to a corresponding SKU code.

Any of the SKU codes of the first exemplary database **400** can be used to conduct a search for information pertaining to one or more tasks executed by Tom. Consequently, using a SKU code 222468 (fifth row **450**) for conducting an exemplary search of the first exemplary database **400** provides an indication that Tom completed the fifth task (which involved handling an object weighing 50.0 pounds) in 28 minutes.

The first exemplary database **400** further includes additional columns **420, 425,** and **430,** that provide performance metrics of other workers who have executed each of the tasks represented by the SKU codes shown in column **405.** The additional columns are populated in a manner similar to that described above with reference to column **410.**

Any of the SKU codes of the first exemplary database **400** can be used to conduct a search for information pertaining to any one or more workers associated with a specific task. Obtaining information pertaining to two or more workers allows for a comparison to be made (by a supervisor, for example) to evaluate one or more of the workers to perform an upcoming task that may or may not be similar to the tasks included in the first exemplary database **400.**

Consequently, using a SKU code 222468 (fifth row **450**) for conducting a search of the first exemplary database **400** provides an indication that Tom completed the fifth task (which involved handling an object weighing 50.0 pounds) in 28 minutes whereas a third worker, Jack (column **425**), completed the fifth task faster than Tom in 21 minutes. Based on the search result, the supervisor can make an informed decision to use Jack for an upcoming task that involves rapidly handling an object weighing about 50 pounds (60 pounds, for example).

On the other hand, a search of the first exemplary database **400** by using a SKU code 230657 (fourth row **445**), would indicate via column **430** that another worker, Rick, would be most suitable for rapidly executing an upcoming task that involves handling an object weighing less than a pound. Thus, in accordance with the disclosure, a task assignment procedure that utilizes a database such as the first exemplary database **400** can allow for comparing a first performance metric of a first worker to a second performance metric of a second worker for executing a second task. In one exemplary implementation, the second may be defined by a numerical value indicative of a level of difficulty of executing the second task.

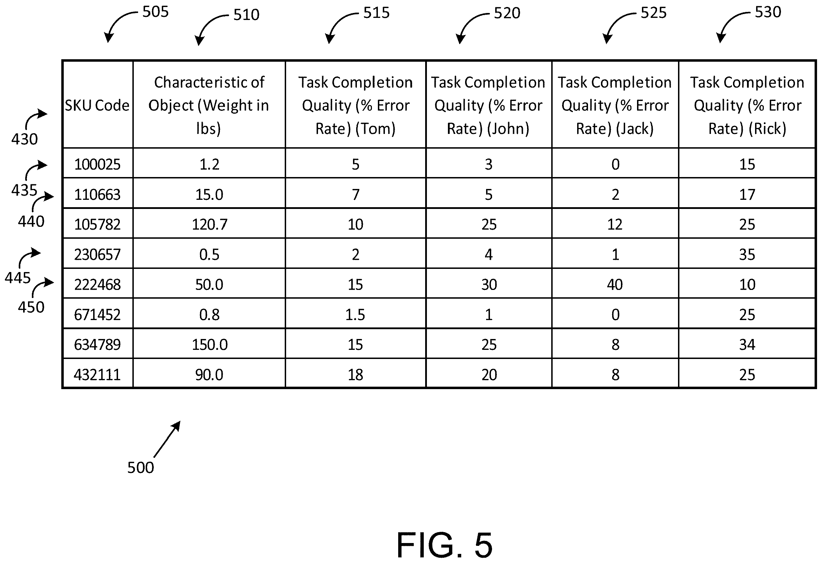

FIG. 5 shows a second exemplary database **500** that can be used to execute a task assignment procedure in accordance with the disclosure. While the first exemplary database **400** described above can be useful for identifying who among a set of workers works fastest on completing various tasks involving handling objects of various weights, the second exemplary database **500** can be used for obtaining information about the quality of the work performed by the various workers during execution of the various tasks.

As can be appreciated from the description above with reference to FIGs. 1 and 2, speed of completion of a task may be merely one criterion for evaluating one or more workers for upcoming tasks. Consequently, in an exemplary implementation, the second exemplary database **500** can be merged with the first exemplary database **400** into a single integrated database that accommodates search procedures that provide time information as well as work quality information of the various workers executing the various tasks. An integrated database that contains data from the first exemplary database **400** and the second exemplary database **500** allows a human entity, such as a supervisor, to carry out a SKU code based search and identify the most suitable worker(s) based on an informed decision incorporating a trade-off between speed of task completion and task completion quality.

The second exemplary database **500** includes a header row **530** and several other rows below the header row **530.** In this exemplary implementation, each of a first column **505** and a second column **510** of the second exemplary database **500** is identical to a respective one of the first column **405** and the second column **410** of the first exemplary database **400,** thereby allowing for easy merger of the two databases if desired.

However, a third column **515** of the second exemplary database **500** contains information pertaining to a task completion quality of the first worker (Tom), a fourth column **520** contains information pertaining to a task completion quality of the second worker (John), and so on (of the same workers as indicated in the first exemplary database **400**). In this example, the task completion quality is indicated by a percentage error rate. The percentage error rate can be based on an amount of deviation from one or more work-quality standards.

In other implementations, the task completion quality can be indicated using other parameters such as customer satisfaction ratings (when the task involves interaction with a customer) and manufactured product quality (when the task involves manufacturing an object).

As described above, using the SKU code 222468 (fifth row **450**) for conducting a search of the first exemplary database **400** provided a search result that led the supervisor to make an informed decision to use Jack for an upcoming task that involves handling an object weighing about 50 pounds. However, upon using the same SKU code 222468 (fifth row **450**) for conducting a search of the second exemplary database **500** provides an indication to the supervisor that Jack has a 40% error rate when executing the task, which may be an unacceptable indication of task completion quality when compared against a work-quality standard. Based on the task completion quality information obtained from searching the second exemplary database **500** in conjunction with the searching the first exemplary database **400,** allows the supervisor to make a more informed decision to use a worker other than Jack for the upcoming task. Selecting a worker in this manner, allows for a combination of factors to be taken into consideration when selecting a worker for an upcoming task.

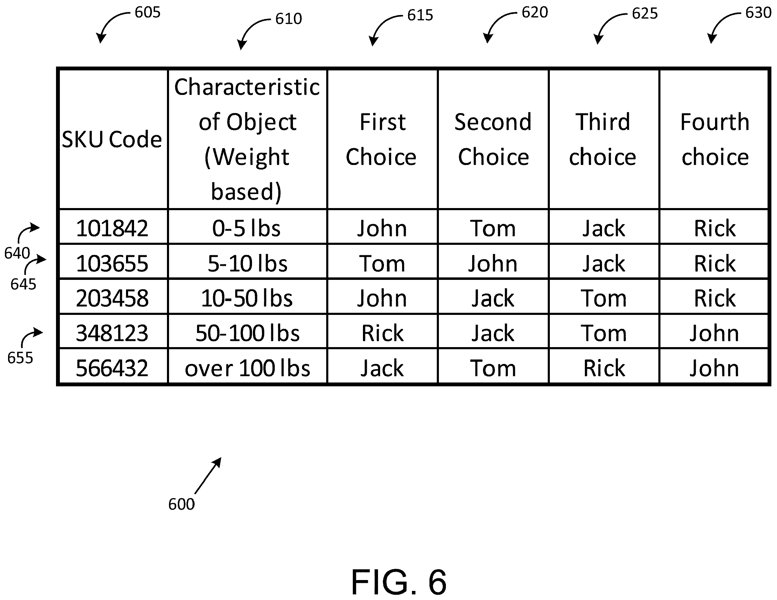

FIG. 6 shows a third exemplary database **600** that can be used to execute a task assignment procedure in accordance with the disclosure. As described above, a combination of information obtained by searching the first exemplary database **400** and the second exemplary database **500** provided information to recognize that Jack was not necessarily the best choice for executing the upcoming task. The third exemplary database **600** can be generated by a human entity such as an administrator or the supervisor, based on the supervisor's recommendations after using the first exemplary database 400 and the second exemplary database **500** (plus one or more other databases (not shown) if so desired). The third exemplary database **600** provides information pertaining to a preferential order of selection among workers for executing tasks based on the characteristics of various objects (in this example, a weight class of various objects). In other embodiments, the various objects can be characterized using parameters other than a weight parameter, such as a size parameter, a portability parameter, and/or a damage resistance parameter.

In accordance with this exemplary embodiment, a first column **605** of the third exemplary database **600** contains various exemplary machine-readable codes (exemplary SKU codes in this example). The SKU codes can be assigned by various entities, such as a supervisor of a work facility or an administrator associated with the work facility. The assignment involves using a task assignment system (such as the computing system 300 described above) to assign a unique SKU code to each task based on a weight class of an object handled during execution of the task.

Thus, the SKU code 101842 shown in the first row **640** of the third exemplary database **600** is assigned to a first weight class (0 to 5 pounds) of an object handled during execution of a first task, the SKU code 103655 shown in the second row **645** of the third exemplary database **600** is assigned to a second weight class (5 to 10 pounds) of an object handled during execution of a second task, and so on. The second column **610** of the third exemplary database **600** indicates various exemplary weight classes of various objects that can be handled during execution of various tasks.

In one exemplary implementation, each of the SKU codes shown in the first column **605** of the third exemplary database **600** can be linked to the SKU codes in the first column **405** of the first exemplary database **400** and/or the first column **505** of the second exemplary database **500.**

Thus, in a first exemplary implementation, two or more of the first exemplary database **400,** the second exemplary database **500,** and the third exemplary database **600** can be merged into a single integrated database that provides information based on a search using one or both of the linked SKU codes.

However, in a second exemplary implementation, each of the SKU codes shown in the first column **605** of the third exemplary database **600** can be independent of the SKU codes used in one or both of the first exemplary database **400** and the second exemplary database **500** and the third exemplary database **600** can be used independent of the first exemplary database **400** and the second exemplary database **500.**

A third column **615** of the third exemplary database **600** provides an indication of a first choice of a worker for each weight class indicated in the first column **610,** a fourth column **620** of the third exemplary database **600** provides an indication of a second choice of worker for each weight class indicated in the first column **610,** and so on. Each of the entries in columns **610, 615, 620, 625,** and **630** is linked to each of the entries in the first column **605** and the second column **610** such that a search of the third exemplary database **600** using one of the SKU codes shown in the first column **605** provides corresponding information corresponding to the SKU code.

Thus, for example, a search of the third exemplary database **600** using a SKU code 348123 (fourth row **655**) provides information that indicates Rick is a first choice for handing an object weighing between 50 and 100 pounds, Jack is a second choice for handling a similar object, and so on.

In other exemplary embodiments, a search of one or more databases such as the first exemplary database **400,** the second exemplary database **500,** and the third exemplary database **600,** can be carried out using search terms other than a SKU code. For example, a database can be searched using the name of a worker and/or a characteristic of an object. Accordingly, a search of the first exemplary database **400** by using the worker name Tom would not only provide information pertaining to Tom's average task completion time but will also provide information pertaining to the SKU codes of the various tasks executed by Tom. The SKU codes revealed by this search can then be used for example to identify other workers who have worked on the tasks associated with the various SKU codes and can also be used to compare the performance characteristics of Tom against other workers.

In the specification and/or figures, exemplary embodiments of the invention have been disclosed. The present disclosure is not limited to such exemplary embodiments. For example, it should be understood that a printer is merely one example of a device in the description above can be replaced by various other types of devices without detracting from the spirit of the disclosure. The use of the term "and/or" includes any and all combinations of one or more of the associated listed items. The figures are schematic representations and so are not necessarily drawn to scale. Unless otherwise noted, specific terms have been used in a generic and descriptive sense and not for purposes of limitation.

## Claims

1. A method comprising:
assigning a machine-readable code to a first task;
evaluating a first worker executing the first task;
creating a first performance metric of the first worker for the first task based on the evaluation;
storing the first performance metric of the first worker in a database;
configuring the database to associate the machine-readable code with the first performance metric of the first worker;
evaluating a second worker executing the first task;
creating a second performance metric of the second worker for the first task based on the evaluation;
storing the second performance metric of the second worker in the database;
configuring the database to associate the machine-readable code with the second performance metric of the second worker; and
executing a task assignment procedure comprising:
utilizing the machine-readable code to search the database and access the first performance metric of the first worker and the second performance metric of the second worker; and
utilizing the first performance metric and the second performance metric to evaluate at least one of the first worker or the second worker for executing a second task.

2. The method of claim 1, wherein the machine-readable code is a stock keeping unit (SKU) code.

3. The method of claim 2, wherein the first performance metric of the first worker is characterized at least in part, by a first error rate, and the second performance metric of the second worker is characterized at least in part, by a second error rate.

4. The method of claim 3, wherein each of the first error rate and the second error rate is based at least in part, on handling of a first object when executing the first task, the first object **characterized by** at least one of a weight parameter, a size parameter, a portability parameter, or a damage resistance parameter.

5. The method of claim 4, wherein the second task comprises handling a second object that is substantially similar to the first object.

6. The method of claim 3, wherein each of the first error rate and the second error rate is indicative of an amount of deviation from at least one work-quality standard.

7. The method of claim 2, wherein each of the first performance metric and the second performance metric comprises a time taken to complete the first task.

8. The method of claim 2, wherein the database is located in a first computer, and wherein executing the task assignment procedure comprises:
initiating a request in a second computer;
transmitting the request from the second computer to the first computer; and
executing the task assignment procedure in one of the first computer or the second computer.

9. A non-transitory computer-readable storage medium having a computer-executable program comprising instructions for:
receiving at least a first machine-readable code, the first machine-readable code at least indicative of a characteristic of a first object or a characteristic of a first task;
utilizing the first machine-readable code to search a database, the database comprising a name of a first worker, a name of a second worker, one or more performance metrics of the first worker, and one or more performance metrics of the second worker;
comparing the one or more performance metrics of the first worker to the one or more performance metrics of the second worker; and
offering a search result that recommends utilizing one of the first worker or the second worker for at least one of handling the first object or executing the first task.

10. The non-transitory computer-readable storage medium of claim 9, wherein the first machine-readable code is a stock keeping unit (SKU) code.

11. The non-transitory computer-readable storage medium of claim 10, wherein the characteristic of the first object comprises at least one of a weight parameter, a size parameter, a portability parameter, or a damage resistance parameter.

12. The non-transitory computer-readable storage medium of claim 9, wherein the one or more performance metrics of the first worker is based on at least one performance evaluation of the first worker when the first worker is at least one of handling the first object, handling a second object, executing the first task, or executing a second task; and the one or more performance metrics of the second worker is based on at least one performance evaluation of the second worker when the second worker is at least one of handling the first object, handling the second object, executing the first task, or executing the second task.

13. The non-transitory computer-readable storage medium of claim 9, wherein the one or more performance metrics of the first worker comprises at least a first error rate that is calculated based on the first worker executing one or more previous tasks, and wherein the one or more performance metrics of the second worker comprises at least a second error rate that is calculated based on the second worker executing the one or more previous tasks.

14. The non-transitory computer-readable storage medium of claim 13, wherein each of the first error rate and the second error rate is indicative of an amount of deviation from at least one work-quality standard.
